# EUROPEAN PATENT APPLICATION

(11) **EP 2 157 386 A1**
(43) Date of publication of application: **24.02.2010**
(21) Application number: 08710425.3
(22) Date of filing: 19.02.2008
(51) Int. Cl.: F25D 23/06, F25D 19/00

(54) **CASING STRUCTURE OF FREEZER FOR CONTAINER AND PROCESS FOR MANUFACTURING THE SAME**

(30) Priority: 25.04.2007 JP 2007115575
(71) Applicant: Daikin Industries, Ltd., Osaka-shi, Osaka 530-8323 (JP)
(72) Inventor: KITAMURA, Yoshinori, Sakai-shi Osaka 591-8511 (JP); HIRADE, Hirofumi, Sakai-shi Osaka 591-8511 (JP)
(74) Representative: HOFFMANN EITLE
(86) International application number: PCT/JP2008/000272
(87) International publication number: WO 2008/136163

(57) **Abstract**

In a casing structure for a container refrigerator which includes an outer casing and an inner casing between which a thermal barrier is formed, a structure is provided in which a foaming agent for forming the thermal barrier can be prevented from leaking and operation time and manufacturing cost can be reduced.
On an inner side surface (30a) of a flange (34) of the outer casing (30), a rib (34c) is formed so as to be engaged with an outer peripheral edge (35b) of the inner casing (35) when the foaming agent (38) is foamed in a foaming space (V) between the outer casing (30) and the inner casing (35). A sealant (40) is provided in a gap between the outer peripheral edge (35b) of the inner casing (35) and the inner side surface (30a) of the outer casing (30) and/or in part of the gap on a side of the foaming space (V).

## Description

### TECHNICAL FIELD

The present disclosure relates to casing structures for container refrigerators cooling the inside of containers, which are mounted so as to cover the end surfaces of container boxes, and more particularly to a strategy for preventing a casing from being deformed in foaming a foaming agent for forming a thermal barrier.

### BACKGROUND ART

Conventionally, as one example of container refrigerators for cooling the inside of containers used for marine transportation and the like, a refrigerating apparatus having a configuration shown in Patent Document 1, for example, has been known.

The above container refrigerator includes a refrigerant circuit configured by connecting a compressor, a condenser, an evaporator, and the like to refrigerant pipes, and a casing mounted so as to cover one side opening of a container box inside which a cargo compartment is formed. In the container refrigerator, the compressor, the condenser, and the like are disposed outside the casing (outside the container), while the evaporator and the like are disposed inside the casing (inside the container).

The casing includes an outer casing mounted at the one side opening of the container box, and an inner casing mounted on the inner side of the outer casing. Between the outer casing and the inner casing, a space is formed, in which a heat insulator is disposed to serve as a thermal barrier.

PATENT DOCUMENT 1: Japanese Unexamined Patent Application Publication No. 8-337285

### SUMMARY OF INVENTION

### TECHNICAL PROBLEM

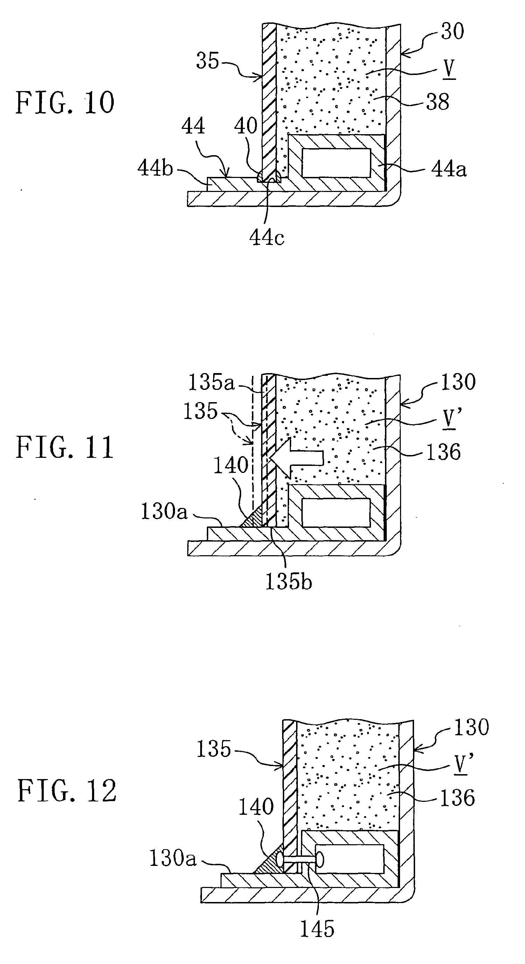

In general, the thermal barrier is formed by filling and foaming a foaming agent in a space between the outer casing and the inner casing. Here, as shown in FIG. 11, in order to form the space (V') between the inner casing (135) and the outer casing (130), an outer peripheral edge (135b) of the inner casing (135) is formed so as to be positioned on the inner side surface (130a) of the outer casing (130). For this reason, when the forming agent (136) is foamed in the space (V'), large foaming pressure is applied to the outer casing (130) and the inner casing (135) to cause deformation in a manner that extends the outer peripheral edge portion (135a) of the inner casing (135) (the dash-dot line in FIG. 11). This may cause the foaming agent (136) to leak from a gap between the inner casing (135) and the outer casing(130).

Further, as shown in FIG. 11, if a sealant (140) is sealed from the outside so as to block the gap between the outer peripheral edge (135b) of the inner casing (135) and the inner side surface (130a) of the outer casing (130), a foaming process cannot be performed until the sealant (140) is dried completely. Further, if the outer peripheral edge portion (135a) of the inner casing (135) is deformed as above, the sealant (140) may be broken to insufficiently seal the gap.

In order to tackle this problem, in conventional manufacturing processes, the inner casing (135) is connected to the outer casing (130) by means of rivets (145) or the like, as shown in FIG. 12, or the inner casing (135) is pressed inward by means of a jig, such as a wedge, vise, or the like, thereby preventing deformation of the inner casing (135). In addition, the foaming process is not performed until the sealant (140) is cured completely.

For this reason, the conventional manufacturing processes need to mount the rivets or the jig to the casing for preventing the foaming agent from leaking in foaming the foaming agent. This can increase process steps and manufacturing cost. Further, the foaming process can be carried out only after the sealant is dried, thereby elongating the process time period.

The present invention has been made in view of the foregoing, and its objective is to provide a casing structure, in a casing structure for a container refrigerator including an outer casing and an inner casing between which a thermal barrier is formed, in which a foaming agent can be prevented from leaking in forming the thermal barrier, and operation time and manufacturing cost can be reduced.

### SOLUTION TO PROBLEM

In order to attain the above objective, in a casing structure for a container refrigerator (10) according to the present invention, a stopper (34c) for restricting deformation of an outer peripheral edge (35b) of an inner casing (35) in foaming a foaming agent (38) is formed on an inner side surface (30a) of an outer casing (30), thereby preventing leakage of the foaming agent (38) from a gap which may be caused by deformation of the outer peripheral edge (35b) of the inner casing (35).

Specifically, a first example is directed to a casing structure for a container refrigerator which includes an outer casing (30) having a peripheral part fixed to a container box (2) so as to cover one end surface of the container box (2), and an inner casing (35) covering a casing inner side of the outer casing (30) so as to form a foaming space (V) for foaming a foaming agent (38) between the inner casing (35) and the outer casing (30).

In the casing structure, when the inner casing (35) is joined to the outer casing (30), an outer peripheral edge (35b) of the inner casing (35) is positioned on an inner side surface (30a) of the outer casing (30), and the outer casing (30) includes on the inner side surface (30a) a stopper (34c, 44c) engaged with the outer peripheral edge (35b) so as to restrict deformation of the outer peripheral edge (35b) of the inner casing (35) in foaming the foaming agent (38) in the foaming space (V).

By the above configuration, in foaming the foaming agent (38) in the foaming space (V) between the inner casing (35) and the outer casing (30), the stopper (34c) formed on the inner side surface (30a) of the outer casing (30) stops the outer peripheral edge (35b) of the inner casing (35) to suppress deformation, thereby preventing the gap between the inner side surface (30a) of the outer casing (30) and the outer peripheral edge (35b) of the inner casing (35) from increasing. Accordingly, the above configuration can prevent the foaming agent (38) from leaking from the gap between the outer casing (30) and the inner casing (35) in foaming the foaming agent (38).

That is, formation of the stopper (34c) on the inner side surface (30a) of the outer casing (30) as above may eliminate the need to provide rivets for connecting the inner casing (35) to the outer casing (30) and to mount a jig, such as a wedge, vise, or the like for suppressing deformation of the inner casing (35). This can facilitate preparation before foaming, thereby achieving reduction in operation time and manufacturing cost.

In the above configuration, the stopper is a protrusion (34c) formed on the inner side surface (30a) of the outer casing (30) so as to be located on a casing outer side of the outer peripheral edge (35b) of the inner casing (35) when the inner casing (35) is joined (a second example).

This can permit the protrusion (34c) to stop the outer peripheral edge (35b) of the inner casing (35) in foaming the foaming agent (38), thereby ensuring prevention of deformation of the outer peripheral edge portion (35a) of the inner casing (35). Thus, it can be ensured to prevent the foaming agent (38) from leaking from the gap between the inner casing (35) and the outer casing (30).

In particular, the protrusion (34c) preferably has a protruding ridge shape surrounding the outer peripheral edge (35b) of the inner casing (35) when the inner casing (35) is joined (a third example). This can permit the protrusion (34c) to restrict deformation of the outer peripheral edge (35b) of the inner casing (35) around its entire periphery in foaming the foaming agent (38). Thus, it can be ensured to prevent the foaming agent (38) from leaking from the gap between the inner casing (35) and the outer casing (30).

Furthermore, the protrusion (34c) may have a side surface (34d) on a side of the inner casing (35) when the inner casing (35) is joined, the side surface (34d) being inclined so as to be located on a casing outer peripheral side of the outer casing (30) as it goes to a protruding end (a fourth example). Thus, when the side surface (34d) of the protrusion (34c) on the side of the inner casing (35) is inclined, interference of the protrusion (34c) with the outer peripheral edge (35b) of the inner casing (35) can be prevented, and positioning of the inner casing (35) can be facilitated in joining the inner casing (35) to the outer casing (30).

Moreover, the stopper may be a groove (44c) formed in the inner side surface (30a) of the outer casing (30) correspondingly to the outer peripheral edge (35b) of the inner casing (35) so as to be engaged with the outer peripheral edge (35b) (a fifth example).

Furthermore, a sealant (40) is preferably provided in a gap between the outer peripheral edge (35b) of the inner casing (35) and the inner side surface (30a) of the outer casing (30) and/or in part of the gap located on a side of the foaming space (V) (a sixth example).

Accordingly, when the foaming agent (38) is foamed in the foaming space (V) between the inner casing (35) and the outer casing (30), the foaming pressure is applied to the sealant (40) force in the direction that seals the gap between the inner casing (35) and the outer casing (30). Thus, the foaming agent (38) can be prevented from leaking from the gap between the inner casing (35) and the outer casing (30).

Specifically, by the above configuration, the sealant (40) even in an insufficiently cured state can seal the gap, thereby reducing the time until the sealant (40) is cured before the foaming process. Accordingly, by the above configuration, the operation time for manufacturing the casing (20) can be further reduced, thereby achieving a further reduction in manufacturing const.

Furthermore, in the above configuration, the sealant (40) is located on the casing inner side of the stopper (34c, 44c) formed on the inner side surface (30a) of the outer casing (30). As a consequence, it can be ensured that the stopper (34c, 44c) prevents outflow of the foaming agent (38) outward of the casing (20). Thus, the sealant (40) even in an incompletely cured state can exhibit sufficient sealability.

Referring next to a container refrigerator (10) according to a seventh example, part where the sealant (40) for sealing the gap between the outer peripheral edge (35b) of the inner casing (35) and the inner side surface (30a) of the outer casing (30) is applied is devised to reduce preparation time before the foaming process.

Specifically, the seventh example is directed to a casing structure for a container refrigerator which includes an outer casing (30) having a peripheral part fixed to a container box (2) so as to cover one end surface of the container box (2), and an inner casing (35) covering a casing inner side of the outer casing (30) so as to form a foaming space (V) for foaming a foaming agent (38) between the inner casing (35) and the outer casing (30).

In the casing structure, when the inner casing (35) is joined to the outer casing (30), an outer peripheral edge (35b) of the inner casing (35) is positioned on an inner side surface (30a) of the outer casing (30), and a sealant (40) is provided in a gap between the outer peripheral edge (35b) of the inner casing (35) and the inner side surface (30a) of the outer casing (30) and/or in part of the gap located on a side of the foaming space (V).

In the above configuration, when the foaming agent (38) is foamed, the foaming pressure is applied to the sealant (40) force in the direction that seals the gap between the outer peripheral edge (35b) of the inner casing (35) and the inner side surface (30a) of the outer casing (30). Accordingly, even if the sealant (40) is not completely cured, the foaming agent (38) can be prevented from leaking from the gap between the inner casing (35) and the outer casing (30).

Thus, the above configuration can allow the foaming process to be carried out without waiting curing of the sealant (40) before foaming the foaming agent (38), thereby reducing the operation time for manufacturing the casing (20). This can achieve a reduction in manufacturing cost of the casing (20).

In the above casing structure, the outer casing (30) is made of an aluminum alloy, and the inner casing (35) is made of fiber reinforced plastic (an eighth example). In the case where the inner casing (35) is made of fiber reinforced plastic, the inner casing (35) tends to be deformed by the foaming pressure in foaming. For this reason, application of the above configuration to any of the configurations according to the first to seventh examples is more advantageous because prevention of leakage of the foaming agent (38) can be ensured.

Next, referring to a method for manufacturing a casing for a container refrigerator according to a ninth example, the sealant (40) is applied to the inner side surface (30a) of the outer casing (30). The inner casing (35) is joined and fixed to the outer casing (30) so that the sealant (40) is located in the gap between the outer peripheral edge portion (35b) of the inner casing (35) and the inner side surface (30a) of the outer casing (30) and/or in part of the gap located on the casing inner side of the inner casing (35). Then, the foaming agent (38) is foamed in the foaming space (V).

Specifically, the ninth example is directed to a method for manufacturing a casing for a container refrigerator which includes an outer casing (30) having a peripheral part fixed to a container box (2) so as to cover one end surface of the container box (2), and an inner casing (35) covering a casing inner side of the outer casing (30) so as to form a foaming space (V) for foaming a foaming agent (38) between the inner casing (35) and the outer casing (30).

The method includes: an inner casing forming step (SA1) of forming the inner casing (35) so that, when the inner casing (35) is joined to the outer casing (30), the outer peripheral edge (35b) of the inner casing (35) is positioned on the inner side surface (30a) of the outer casing (30); an outer casing forming step (SB1) of forming the outer casing (30) so that a stopper (34c) engaged with the outer peripheral edge (35b) of the inner casing (35) when the foaming agent (38) is foamed in the foaming space (V) is formed on the inner side surface (30a); a sealant applying step (SB6) of applying a sealant (40) to predetermined part on a casing inner side of the stopper (34c) on the inner side surface (30a) of the outer casing (30); a casing assembling step (SB7) of joining and fixing the casings (30, 35) to each other while positioning the outer peripheral edge (35b) of the inner casing (35) relative to the stopper (34c) so that the applied sealant (40) is located in a gap between the inner side surface (30a) of the outer casing (30) and the outer peripheral edge (35b) of the inner casing (35) and/or in part on a casing inner side of the outer peripheral edge (35b) of the inner casing (35); and a thermal barrier forming step (SB11) of forming a thermal barrier (15) by foaming the foaming agent (38) after filling it in the foaming space (V) formed between the outer casing (30) and the inner casing (35) joined to each other.

In this method, the sealant (40) is provided in the gap between the inner side surface (30a) of the outer casing (30) and the outer peripheral edge (35b) of the inner casing (35) and/or part on the casing inner side of the inner casing (35). Accordingly, in the thermal barrier forming step (SB1) for foaming the foaming agent (38), the foaming pressure works on the sealant (40) so as to seal the gap between the outer casing (30) and the inner casing (35), thereby achieving an improvement of the sealability between the outer casing (30) and the inner casing (35). Further, as described above, the foaming pressure works on the sealant (40) to allow the sealant (40) to exhibit sealability. Therefore, even if the sealant (40) is not completely cured, a given level of sealability can be obtained. As a consequence, the foaming process can be carried out without waiting complete curing of the sealant (40) before the foaming process. That is, by the above method, the casing (20) can be obtained in which the foaming agent (38) can be prevented from leaking in foaming, and the operation time can be reduced.

Furthermore, since the outer peripheral edge (35b) of the inner casing (35) is positioned on the casing inner side of the stopper (34c) formed on the inner side surface (30a) of the outer casing (30), the stopper (34c) stops the outer peripheral edge (35b) of the inner casing (35) receiving the foaming pressure in forming the foaming agent (38), thereby suppressing deformation over the stopper (34c). Thus, the outer peripheral edge (35b) of the inner casing (35) is prevented from being deformed in foaming. Further, the foaming agent (38) can be prevented from leaking from the gap between the outer peripheral edge (35b) of the inner casing (35) and the inner side surface (30a) of the outer casing (30).

### ADVANTAGES OF INVENTION

As described above, in the casing structure for the container refrigerator (10) according to the first example, the stopper (34c) for stopping the outer peripheral edge (35b) of the inner casing (35) is formed on the inner side surface (30a) of the outer casing (30). Accordingly, in forming the foaming agent (38) in the foaming space (V) between the outer casing (30) and the inner casing (35), leakage of the foaming agent (38) from the gap between the inner casing (35) and the outer casing (30), which is caused by deformation of the outer peripheral edge (35b) of the inner casing (35) in foaming, can be prevented. Therefore, preparation time before foaming can be reduced when compared with the conventional cases where deformation of the inner casing (35) is suppressed by using rivets or a jig, such as a wedge and a vise. Thus, the manufacturing cost can be reduced.

In the second example, the stopper is the protrusion (34c) formed on the inner side surface (30a) of the outer casing (30) so as to be positioned on the casing inner side of the outer peripheral edge (35b) of the inner casing (35). This can ensure prevention of deformation of the outer peripheral edge (35b) of the inner casing (35) in foaming the foaming agent (38).

In the third example, the protrusion (34c) surrounds the outer peripheral edge (35b) of the inner casing (35). Accordingly, it can be ensured to prevent the outer peripheral edge (35b) of the inner casing (35) from being deformed, thereby ensuring prevention of leakage of the foaming agent (38) from the gap between the inner casing (35) and the outer casing (30).

In the fourth example, the protrusion (34c) is inclined so that its side surface (34c) on the side of the inner casing (35) is located outward of the inner casing (35) as it goes to the protrusion end. Thus, in joining the inner casing (35) to the outer casing (30), interference of the protrusion (34c) with the outer peripheral edge (35b) of the inner casing (35) can be prevented, thereby improving workability in assembling the casing (20).

In the fifth example, the stopper is the groove (44c) capable of being engaged with the outer peripheral edge (35b) of the inner casing (35). By this configuration, also, the outer peripheral edge (35b) of the inner casing (35) can be prevented from being deformed in foaming the foaming agent (38).

In the sixth example, the sealant (40) is provided in the gap between the outer peripheral edge (35b) of the inner casing (35) and the inner side surface (30a) of the outer casing (30) and/or in part of the gap on the side of the foaming space (V). Accordingly, the foaming pressure works to enhance the sealability of the sealant (40). This enables foaming process to be carried out before the sealant (40) is completely cured, thereby reducing the operation time. Further, since the sealant (40) is located on the casing inner side of the stopper (34c), the stopper (34c) can prevent the sealant (40) from flowing out, thereby ensuring sufficient sealability.

In the casing structure for the container refrigerator (10) according to the seventh example, the sealant (40) is provided in the gap between the outer peripheral edge portion (35b) of the inner casing (35) and the inner side surface (30a) of the outer casing (30) and/or in the part of the gap located on the side of the foaming space (V). Accordingly, the foaming pressure of the foaming agent (38) works to enhance the sealability of the sealant (40), thereby enabling the foaming process to be carried out before the sealant (40) is cured. Thus, the operation time of the foaming process can be reduced.

In the eighth example, the outer casing (30) is made of an aluminum alloy, and the inner casing (35) is made of fiber reinforced plastic. Thus, even if the inner casing (35) is made of a material tending to be deformed by the foaming pressure, the configurations according to the first to seventh examples can suppress deformation of the inner casing (35), thereby preventing the foaming agent (3 8) from leaking.

In the method for manufacturing a casing for a container refrigerator (20) according to the ninth example, after the sealant (40) is applied to the inner side surface (30a) of the outer casing (30), the outer peripheral edge (35b) of the outer casing (30) is positioned relative to the stopper (34c) of the outer casing (30) so that the sealant (40) is located in the gap between the outer casing (30) and the inner casing (35) and/or on the casing inner side of the outer peripheral edge (35b) of the inner casing (35). This simple configuration and assembling method can obtain the casing (20) in which the foaming agent (38) can be prevented from leaking in foaming before the sealant (40) is completely cured. That is, by the above method, the casing (20) at low manufacturing cost can be obtained in which the foaming agent (38) can be prevented from leaking, and the operation time can be reduced.

### BRIEF DESCRIPTION OF DRAWINGS

[FIG. 1] FIG. 1 is a perspective view schematically showing a configuration of a container refrigerator according to one example embodiment of the present invention.
[FIG. 2] FIG. 2 is a cross-sectional view taken along the line II-II in FIG. 1.
[FIG. 3] FIG. 3 is a perspective view schematically showing a configuration of an outer casing.
[FIG. 4] FIG. 4 is a perspective view schematically showing a casing where an inner casing is joined to an outer casing.
[FIG. 5] FIG. 5 is a cross-sectional view taken along the line V-V in FIG. 4.
[FIG. 6] FIG. 6 show the casing where an inner casing having a deformed peripheral edge portion is mounted on a flange of an outer casing ((A) corresponds to FIG. 5, and (B) is a cross-sectional view taken along the line VIb-VIb).
[FIG. 7] FIG. 7 shows the relationship between pressure resistance and curing time where a sealant is provided (A) outside, (B) below, and (C) inside a member to which inner pressure is applied.
[FIG. 8] FIG. 8 is a flowchart showing a flow for manufacturing a casing.
[FIG. 9] FIG. 9 illustrates partially enlarged cross-sectional views showing the vicinity of the outer peripheral edge of an inner casing in the casing manufacturing flow ((A) when a sealant is applied, (B) when an inner casing is joined, and (C) when a foaming agent is foamed).
[FIG. 10] FIG. 10 is a view corresponding to FIG. 5 according to another example embodiment.
[FIG. 11] FIG. 11 is a view corresponding to FIG. 5 according to a conventional configuration.
[FIG. 12] FIG. 12 is a view corresponding to FIG. 5 according to a conventional configuration where rivets connect and fix casings to each other.

### DESCRIPTION OF REFERENCE CHARACTERS

- 1: container
- 2: container box
- 10: container refrigerator
- 15: thermal barrier
- 20: casing
- 30: outer casing
- 30a: inner side surface
- 34: flange
- 34c: rib (protrusion)
- 34d: inclined surface
- 35: inner casing
- 35a: outer peripheral edge portion
- 35b: outer peripheral edge
- 38: foaming agent
- 40: sealant
- 44: flange
- 44c: groove
- 130: outer casing
- 130a: inner side surface
- 135: inner casing
- 135a: outer peripheral edge portion
- 135b: outer peripheral edge
- 136: foaming agent
- 140: sealant
- S: inner space
- V: foaming space

### DESCRIPTION OF EMBODIMENTS

Example embodiments of the present invention will be described below with reference to accompanying drawings. The following example embodiments are merely preferred examples, and are not intended to limit the scope of the present invention, its applicable objects, and its use.

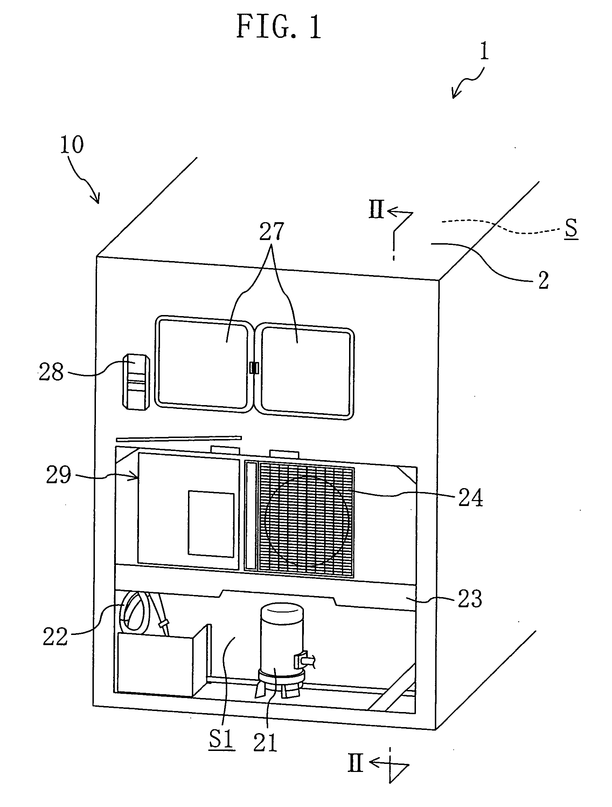

As shown in FIG. 1, a container refrigerator (10) according to the present example embodiment is provided at one end surface of a container (1) used for marine transportation or the like. The container refrigerator (10) performs a refrigeration cycle by circulating refrigerant in a refrigerant circuit (not shown) to cool (refrigerate or freeze) the inside of the container (1).

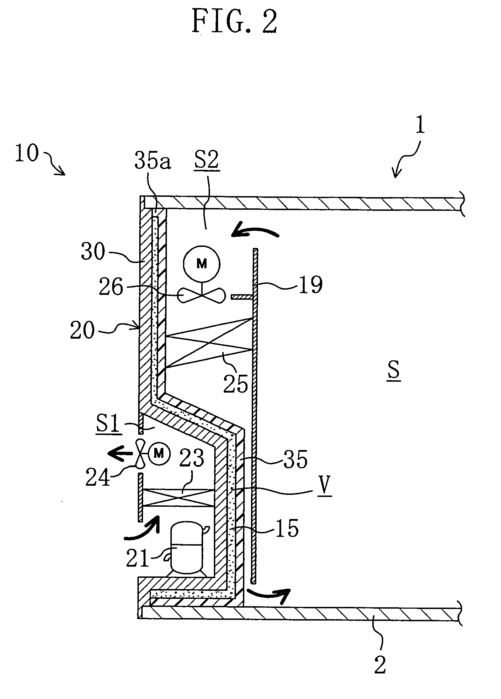

As also shown in FIG. 2, in order to cover an open end surface of a container box (2) in a bottomed cylindrical shape, the container refrigerator (10) includes a casing (20) whose peripheral edge is attached to the container box (2). That is, the casing (20) is mounted to the container box (2) to form the one end surface of the container (1), thereby defining and forming an inner space (S) in the container box (2).

The casing (20) is formed so that its lower part swells inward. Accordingly, the outside at the lower part of the casing (20) forms an outer storage space (S1). On the other hand, the inside at the upper part of the casing (20) forms an inner storage space (S2) between the casing (20) and a wall member (19) mounted at the casing (20) on the inner side of the container (1).

The outer storage space (S1) forms an outdoor air passage allowing outdoor air to flow therethrough. In the outer storage space (S1), a compressor (21), a power supply cable (22), a condenser (23), an outer fan (24), and the like are disposed. The compressor (21) is a scroll compressor of fixed volume type. The condenser (23) is a so-called air cooled condenser which provides heat exchange between outdoor air blown by the outer fan (24) and the refrigerant.

The inner storage space (S2) forms an indoor air passage allowing indoor air to pass therethrough. In the inner storage space (S2), an evaporator (25) and an inner fan (26) are disposed. The evaporator (25) is a so-called air cooled evaporator that performs heat exchange between indoor air blown by the inner fan (26) and the refrigerant.

It is noted that the refrigerant circuit is formed by connecting the compressor (21), the condenser (23), the evaporator (25), an expansion valve (not shown), and the like in the outer storage space (S1) and the inner storage space (S2) to one another through refrigerant pipes.

As shown in FIG. 1, inspection windows (27) including doors capable of being opened at maintenance, and a ventilator (28) are provided at the upper part of the casing (20). The ventilator (28) forms a ventilating device for ventilating the air in the container (1). At the front surface (outer surface) of the casing (20) in the outer storage space (S1), an electric component box (29) is mounted at a part adjoining the outer fan (24).

The casing (20) includes, as shown in FIG. 2, an outer casing (30) located on the outer side of the container (1) and an inner casing (35) located on inner side thereof. The outer casing (30) is made of an aluminum alloy, and is attached at the peripheral part of the container box (2) so as to cover the end surface of the container box (2). The inner casing (35) is made of fiber reinforced plastic (FRP), and is attached so as to cover the outer casing (30) on the inner side of the container (1).

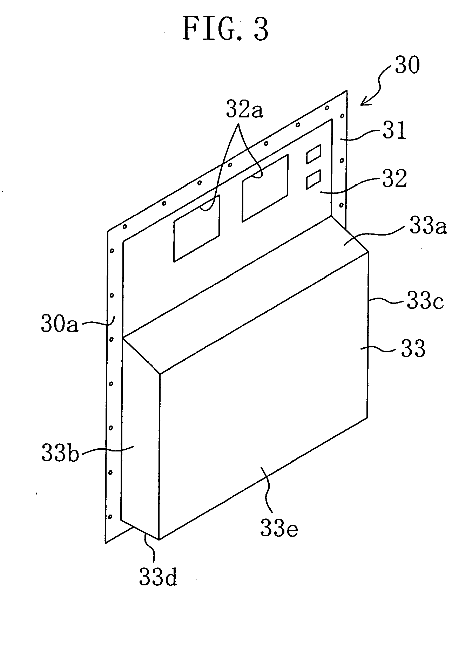

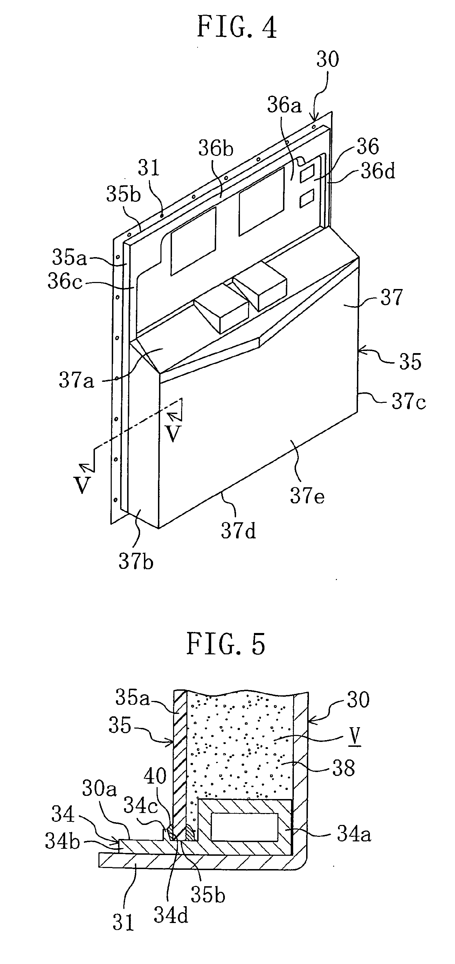

The outer casing (30) has, as shown in FIG. 3, a lower part swelled inward of the container (1). The outer casing (30) includes a substantially flat upper portion (32), a lower swelled portion (33) swelled inward of the container (1) and having a rectangular parallelepiped shape, and a mounting portion (31) having a rectangular shape when viewed from the front and arranged at the outer periphery of the casing (20) so as to surround them. To the mounting portion (31), a flange (34) made of an aluminum alloy, which will be described later in detail, is welded, as shown in FIG. 5. A plurality of bolt holes are formed in the mounting portion (31) (see FIG. 3). Thus, the outer casing (30) is attached to the peripheral part of the opening of the container box (2) by inserting bolts to the bolt holes of the mounting portion (31) with the inner casing (35) fixed on the flange (34).

Here, the flange (34) includes, as shown in FIG. 5, a spacer portion (34a) in a rectangular O shape in section, and a tongue (34b) extending from one side of the spacer portion (34a). The flange (34) is welded and fixed on the mounting portion (31) so that the lower surfaces of the spacer portion (34a) and the tongue (34b) are in contact with the mounting portion (31) of the outer casing (30). An outer peripheral edge (35b) of the inner casing (35) is positioned on the tongue (34b). That is, as shown in FIG. 5, the spacer portion (34a) forms a foaming space (V) between the inner casing (35) and the outer casing (30). It is noted that the outer casing (30) in the present invention means the state where the flange (34) is welded to the outer casing (30), and the inner side surface of the outer casing (30) corresponds to the inner side surface of the flange (34).

As shown in FIG. 3, an upper portion (32) of the outer casing (30) is formed continuously to the upper part of the lower swelled portion (33), and has two openings (32a, 32a) at its upper part for inspection windows. Specifically, the openings (32a, 32a) are formed in a rectangular shape and are aligned side by side laterally. The openings (32a, 32a) formed in the upper portion (32) form the inspection windows (27) together with openings formed in the inner casing (35), which will be described later.

The lower welled portion (33) includes an upper surface portion (33a), two side surface portions (33b, 33c), a lower surface portion (33d), and a bottom surface portion (33e). Specifically, the upper surface portion (33a), the lower surface portion (33d), and the bottom surface portion (33e) are formed in rectangular shapes. On the other hand, the side surface portions (33b, 33c) are in a trapezoidal shape of which one side is inclined. Thus, the lower swelled portion (33) is formed in a box shape whose the upper surface portion (33a) extends obliquely downward to the lower side of the container (1) by connecting the upper surface portion (33a), the side surface portions (33b, 33c), the lower surface portion (33d), and the bottom surface portion (33e), as shown in FIG. 3.

The inner casing (35) is formed along the outer casing (30), as shown in FIG. 4, and includes a lower covering portion (37) swelled inward of the container (1) and an upper covering portion (36) in a flat plate shape correspondingly to the outer casing (30). The lower covering portion (37) and the upper covering portion (36) are formed integrally with each other so that the upper covering portion (36) continues to the upper part of the lower covering portion (37).

The upper covering portion (36) includes a covering body (36a), and an upper frame (36b) and side frames (36c, 36d) which form an angular C shape so as to surround the covering body (36a). The upper flame (36b) and the side frames (36c, 36d) are located on the upper side and lateral sides of the covering body (36a), respectively. The side frames (36c, 36d) extend downward from the respective ends of the upper frame (36b) to form the angular C shape as a whole. The upper frame (36b) and the side frames (36c, 36d) slightly protrude inward of the container (1) relative to the covering body (36a). In the covering body (36a), two openings for inspection windows are formed correspondingly to the openings (32a) of the upper portion (32) of the outer casing (30).

The lower covering portion (37) has almost the same shape as the lower swelled portion (33) of the outer casing (30), and includes an upper surface portion (37a), two side surface portions (37b, 37c), a lower surface portion (37d), and a bottom surface portion (37e). The lower covering portion (37) is formed slightly larger than the lower swelled portion (33) of the outer casing (30) so as to cover the lower swelled portion (33) from the inside of the container (1).

Further, as shown in FIG. 4, the inner casing (35) has an outer peripheral edge portion (35a) bent outward of the container (1) (on the side of the outer casing). When the inner casing (35) is joined to the outer casing (30), the outer peripheral edge (35b) is positioned on the inner side surface (30a) of the outer casing (30) (see FIG. 5).

Accordingly, when the inner casing (35) is mounted to the outer casing (30), the upper covering portion (36) covers part of the upper portion (32) on the inner side of the container (1), and the lower covering portion (37) covers part of the lower swelled portion (33) on the inner side of the container (1). Thus, the foaming space (V) for the thermal barrier (15) is formed between the outer casing (30) and the inner casing (35).

In the foaming space (V), a foaming agent (38) is injected from an injection port (not shown), and is foamed, thereby forming the thermal barrier (15) as shown in FIG. 2. At this time, in order not to allow the foaming agent (38) to flow outside the foaming space (V), the holes and the like formed in the outer casing (30) and the inner casing (35) are blocked, and a gap between the outer casing (30) and the outer peripheral edge (35b) of the inner casing (35) is filled with a sealant (40) (see FIG. 1, for example).

However, when the foaming agent (38) is foamed in the foaming space (V), foaming pressure works on the outer peripheral edge portion (35a) of the inner casing (35) to cause deformation of the outer peripheral edge portion (35a) in a manner that expands the gap between the inner casing (35) and the outer casing (30). Therefore, in order to prevent the deformation of the inner casing (35), the inner casing (35) and the outer casing (30) must be connected to each other by means of many rivets (see FIG. 12). Alternatively, a jig, such as a vise or the like must be used to restrict the deformation of the inner casing (35). This requires considerable operation time for preparation before the foaming process, thereby reducing yields.

Moreover, as shown in FIG. 11, in the case where the gap between the inner side surface (130a) of the outer casing (130) and the outer peripheral edge (135b) of the inner casing (135) is covered with the sealant (140) from outside, if the foaming process is carried out before the sealant (140) is completely cured, the foaming pressure may break part of the sealant (140) to reduce sealability. Therefore, the manufacturing operation must be suspended until the sealant (140) is completely cured. This may further increase the operation time for manufacturing the casing (20), thereby further reducing the yields.

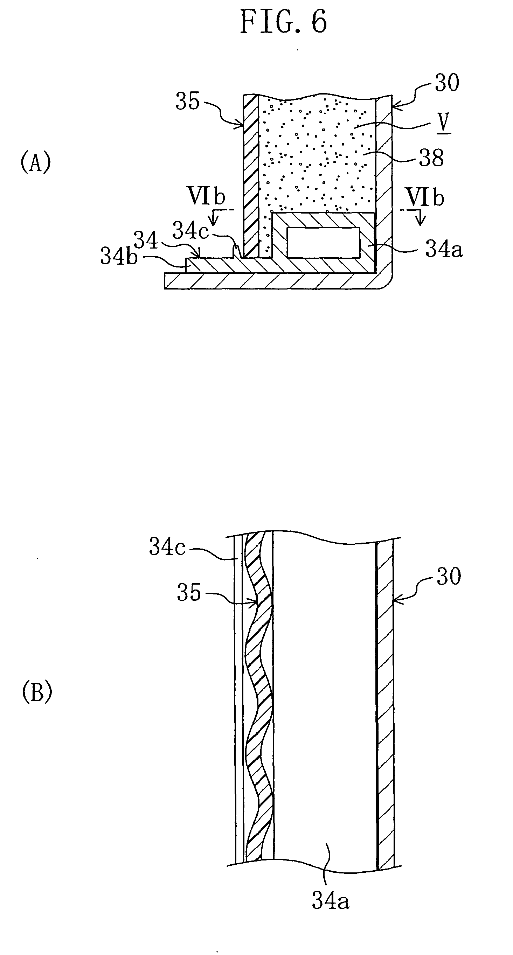

By contrast, in the present invention, the configuration as shown in FIG. 5 is employed as the outer casing (30) corresponding to the outer peripheral edge (35b) of the inner casing (35) so that deformation of the outer peripheral edge portion (35a) of the inner casing (35) can be suppressed even when the foaming pressure works, and so that the manufacturing cost can be reduced. That is, a rib (34c) extending a predetermined distance apart from the spacer portion (34a) of the flange (34) is formed on the inner side surface (30a) (the upper surface in FIG. 5) of the tongue (34b) of the flange (34) welded and fixed to the mounting portion (31) of the outer casing (30). The rib (34c) is formed so as to surround the outer peripheral edge (35b) of the inner casing (35) when the inner casing (35) is joined to the outer casing (30). The outer peripheral edge (35b) of the inner casing (35) is positioned between the rib (34c) and the spacer portion (34a). Here, the above predetermined distance is set at a distance that can allow the outer peripheral edge portion (35a) of the inner casing (35) to be inserted, even if it is deformed, so that dimensional errors of the inner casing (35) and the outer casing (30) can be absorbed (see FIG. 6).

Thus, the rib (34c) can prevent the inner casing (35) from being deformed in foaming the foaming agent (38) in the foaming space (V). This can eliminate the need to connect the inner casing (35) to the outer casing (30) by means of many rivets and to suppress deformation of the inner casing (35) by using a jig, such as a vise, as in conventional cases, thereby achieving a cost reduction by a reduction in the number of rivets, and a reduction in operation time by facilitating preparation before the foaming process. Thus, manufacturing cost of the casing (20) can be reduced. It is noted that the rib (34c) has enough strength to suppress deformation of the inner casing (35) even when the foaming pressure generated in the foaming space (V) works on the outer peripheral edge portion (35a) of the inner casing (35). In other words, the width, height, and the like of the protruding rib (34c) are determined depending on the foaming pressure and the characteristics of the material of the rib (34c).

Moreover, the rib (34c) has a side surface (43d) on the side of the spacer portion (34a) which is inclined so as to be located on the outer peripheral side of the casing (20) as it goes to the protruding end. This can ensure prevention of interference of the rib (34c) of the outer casing (30) with the outer peripheral edge (35b) of the inner casing (35) in joining the inner casing (35) to the outer casing (30). That is, inclination of the side surface (34d) of the rib (34c) can facilitate insertion of the outer peripheral edge (35b) of the inner casing (35) between the rib (34c) and the spacer portion (34a), thereby achieving an improvement of operation for joining the inner casing (35) to the outer casing (30).

Furthermore, in the present invention, the sealant (40) is positioned at part where it can exhibit high sealability so that the foaming process can be carried out without waiting complete curing of the sealant (40). Specifically, the sealant (40) is interposed between the outer peripheral edge (35b) of the inner casing (35) and the inner side surface (30a) of the flange (34) of the outer casing (30) (the inner side surface of the outer casing). This arrangement of the sealant (40) can allow the sealant (40) to be deformed so as to seal the gap between the outer peripheral edge (35b) of the inner casing (35) and the inner side surface (30a) of the flange (34) of the outer casing (30) when the foaming pressure works on the foaming space (V). Thus, the sealant (40) can exhibit a given level of sealability even when it is not completely cured.

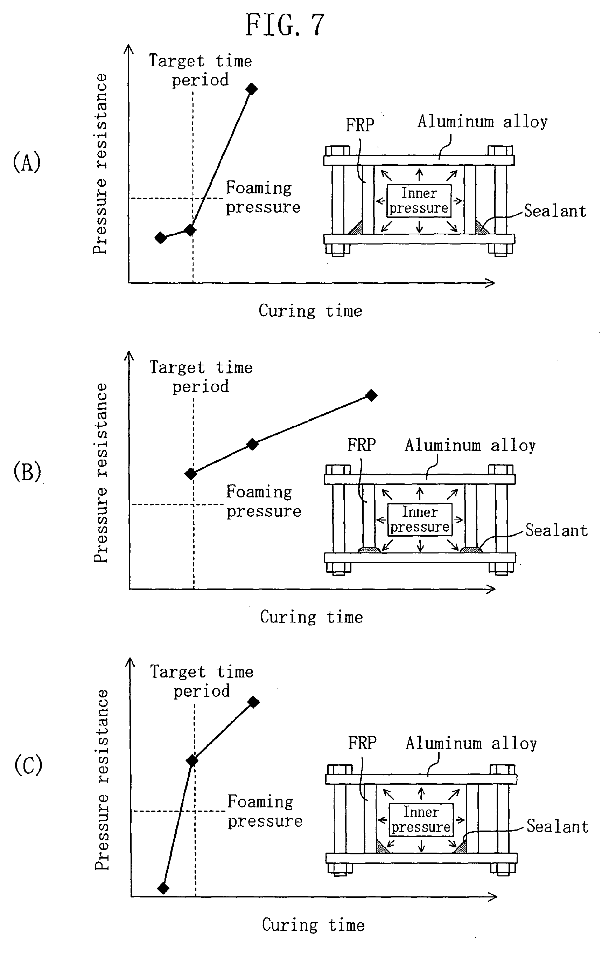

Here, in order to confirm obtainable advantages different from each other according to the position of the sealant (40), a sealant was positioned (A) outside, (B) below, and (C) inside members to which inner pressure is applied, as shown in FIG. 7. Then, the relationships between curing time and pressure resistance where the inner pressure was applied were checked. Referring to a test equipment used in this experiment, as shown in each drawing in FIG. 7, two thin plates made of an aluminum alloy are arranged in parallel to each other, and the FRP components are interposed therebetween. Then, pressure is allowed to work from the inside of the FRP components. The sealant used in this experiment is a silicon based sealant.

As can be understood from FIG. 7, when the sealant was located outside the FRP components (the casing shown in FIG. 7(A)), pressure resistance enough to resist the foaming pressure could not be obtained in a target time period (time before the sealant is sufficiently cured). By contrast, when the sealant was positioned below the FRP components (the casing shown in FIG. 7(B)), and when the sealant was positioned outside the FRP components (the casing shown in FIG. 7(C)), enough pressure resistance to resist the foaming pressure could be obtained within the target time period.

This proves that, when the sealant (40) is interposed between a member on which inner pressure works and another member, a given level of sealability can be obtained even when the sealant (40) is not cured completely.

Further, the above results show that, not only when the sealant (40) is located below the member on which the inner pressure works but also when it is located inside the member, the sealant (40) that is not completely cured can be deformed by the foaming pressure so as to seal the gap, thereby obtaining a given level of sealability. Accordingly, the sealant (40) may be located inside the member on which inner pressure works, rather than below the member on which inner pressure works.

In the present example embodiment, as shown in FIG. 5, the sealant (40) is arranged on the casing inner side of the rib (34c). Accordingly, even when the sealant (40) is not completely cured, the rib (34c) can restrict displacement of the sealant (40), thereby achieving a further improvement of the sealability of the sealant (40). Thus, combination of positioning of the sealant (40) and formation of the rib (34c) can ensure high sealability even when the sealant (40) is not completely cured, thereby remarkably reducing curing time of the sealant (40) before the foaming process.

### - Case Manufacturing Method -

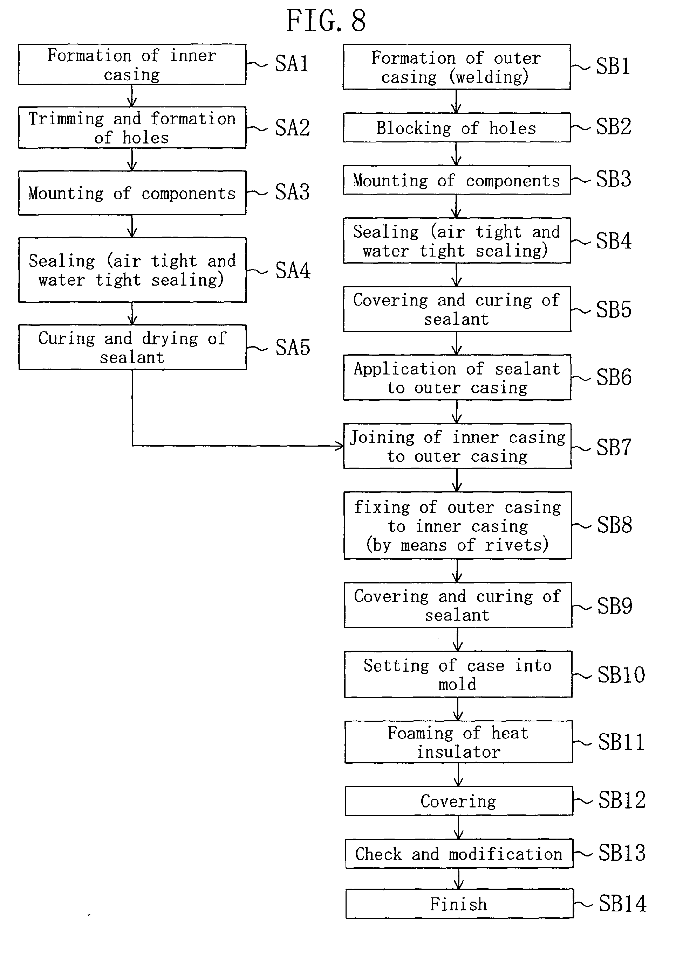

A method for manufacturing the casing (20) having a configuration as above will be described in detail below with reference to a flowchart for manufacture shown in FIG. 8.

In the flowchart in FIG. 8, the inner casing (35) made of resin and the outer casing (30) made of an aluminum alloy are prepared separately, and respective treatment is performed. Then, they are joined to assemble the casing (20). It is noted that, the following description first refers to preparation and treatment of the inner casing (35) for the sake of description. However, the outer casing (30) may be prepared and treated prior to preparation and treatment of the inner casing (35). Alternatively, they may be prepared and treated simultaneously.

Specifically, referring to the inner casing (35), it is foamed by press foaming at SA1 first. At subsequent SA2, the outer periphery of the formed inner casing (35) is trimmed, and holes are formed. Thereafter, components, such as nuts and the like are mounted to the inner casing (35) at SA3.

Next, at SA4, a sealant is applied to gaps and the like of the inner casing (35) so as not to allow the foaming agent (38) filled in the foaming space (V), of which process will be described later, to leak. At this time, sealing is carried out to ensure air tightness and water tightness. Then, the parts subjected to sealing are cured, and the sealant is dried at SA5.

On the other hand, referring to the outer casing (30), the outer casing (30) as shown in FIG. 3 is formed by welding an aluminum component first at step SB1. At this time, the flange (34) is welded and fixed to the mounting portion (31) of the outer casing (30). Subsequently, at SB2, holes formed in the outer casing (30) are blocked. Thereafter, similarly to the case of the inner casing (35), the components are mounted to the outer casing (30) (at SB3), and a sealant is applied to gaps and the like so as not to allow the foaming agent (38) to leak (at SB4).

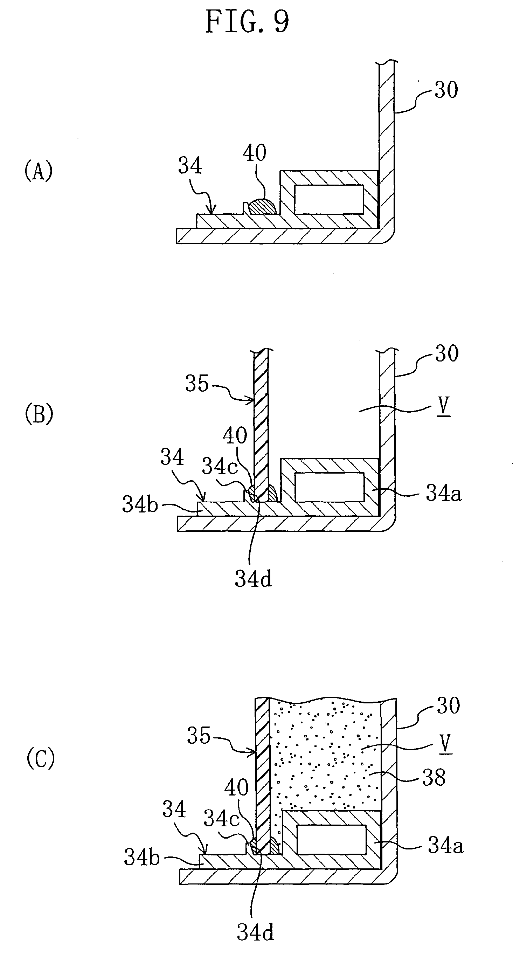

Next, at SB5, the parts subjected to sealing are covered, and the sealant is cured. Then at SB6, the sealant (40) is applied between the rib (34c) and the spacer portion (34a) of the flange (34) welded to the mounting portion (31) of the outer casing (30) (see FIG. 9(A)).

Thereafter, at SB7, the inner casing (35) is joined to the outer casing (30) to which the sealant is applied as above. At this time, the inner casing (35) is joined to the outer casing (30) so that the outer peripheral edge (35b) of the inner casing (35) is positioned between the rib (34c) and the spacer portion (34a) on the tongue (34b) of the flange (34) welded to the outer casing (30). Accordingly, as shown in FIG. 9(B), the sealant (40) is interposed between the outer peripheral edge (35b) of the inner casing (35) and the tongue (34b) of the flange (34) at the position between the rib (34c) and the spacer portion (34a). This can obtain enough pressure resistance to resist the foaming pressure even when the sealant (40) is not completely cured.

After the inner casing (35) is joined to the outer casing (30), they are connected and fixed to each other by means of rivets (at SB8). Then, the parts subjected to sealing are covered and cured (at SB9). The drying time at this time are shorter than time required for completely curing the sealant (40) unlike a conventional drying time, and is time that can allow the sealant (40) to resist the foaming pressure, as shown in FIG. 8 (the target time period in FIG. 8).

Next, at SB 10, the casing (20) including the outer casing (30) and the inner casing (35) is set in a mold, and the foaming agent (38) is filled and foamed in the casing (20) (between the outer casing (30) and the inner casing (35)), as shown in FIG. 9(C) (at SB11). After covering, check is performed, and part where correction is necessary is corrected. Thus, the casing (20) is completed (at SB 12 to SB 14).

Here, forming the inner casing (35) by press forming corresponds to an inner casing forming step (SA1), and forming the outer casing (30) by welding into the shape shown in FIG. 3 (SB1) corresponds to an outer casing forming step.

In addition, applying the sealant (40) between the rib (34c) and the spacer portion (34a) of the flange (34) of the outer casing (30) (SB6) corresponds to a sealant applying step. Joining the inner casing (35) to the outer casing (30) (SB7) corresponds to a casing assembling step. Foaming the foaming agent (38) in the foaming space (V) between the inner casing (35) and the outer casing (30) (SB11) corresponds to a thermal barrier forming step.

### - Driving Operation -

The container refrigerator (10) starts being driven by activating the compressor (21), the outer fan (24), and the inner fan (26). In the refrigerant circuit of the container refrigerator (10), the refrigerant discharged from the compressor (21) is sent to the condenser (23). In the condenser (23), the refrigerant performs heat exchange with the air outside the container (1) sent by the outer fan (24). As a consequence, the refrigerant dissipates heat to the air outside the container (1) to be condensed.

The refrigerant condensed in the condenser (23) is reduced in pressure in the expansion valve, and then is sent to the evaporator (25). In the evaporator (25), the refrigerant performs heat exchange with the air inside the container (1) sent by the inner fan (26). As a consequence, the refrigerant absorbs heat from the air inside the container (1) to be evaporated, thereby cooling the air inside the container (1). It is noted that, as shown in FIG. 2, the air inside the container (1) flows into the outer storage space (S1) from the upper side of the wall member (19) and passes through the evaporator (25). Then, after being cooled by the evaporator (25), the air returns to the inside of the container (1) from the lower side of the wall member (19). The refrigerant evaporated in the evaporator (25) is sucked into the compressor (21) to be compressed again.

### - Advantages of Example Embodiment -

Thus, in the above example embodiment, the rib (34c) is provided on the tongue (34b) of the flange (34) welded and fixed to the mounting portion of the outer casing (30), and the outer peripheral edge (3 5b) of the inner casing (35) is positioned between and the rib (34c) and the spacer portion (34a) of the flange (34). Accordingly, deformation of the outer peripheral edge portion (35a) of the inner casing (35), which is caused by the foaming pressure generated when the foaming agent (38) is foamed in the foaming space (V) between the outer casing (30) and the inner casing (35), can be prevented, thereby preventing the foaming agent (3 8) from leaking from the gap.

That is, provision of the rib (34c) on the side of the outer casing (30) as described above can eliminate the need to connect and fix the inner casing (35) to the outer casing (30) by means of many rivets and to suppress deformation of the inner casing (35) by using a jig, such as a wedge and vise, as in conventional cases. Accordingly, the number of rivets can be reduced, and preparation before the foaming process can be facilitated, thereby reducing time required for manufacturing the casing (20) and manufacturing cost.

Moreover, the rib (34c) is formed to surround the outer peripheral edge (35b) of the inner casing (35). This can further ensure suppression of deformation of the inner casing (35), thereby further ensuring prevention of leakage of the foaming agent (38).

Furthermore, of the side surfaces of the rib (34c), the side surface (34d) on the side of the outer peripheral edge portion (35a) of the inner casing (35) is inclined so as to be located on the outer peripheral side of the outer casing (30) as it goes to the protruding end. Accordingly, interference of the outer peripheral edge (35b) of the inner casing (35) with the rib (34c) can be prevented in joining the inner casing (35) to the outer casing (30). This can facilitate and ensure positioning of the outer peripheral edge (35b) of the inner casing (35) at a predetermined point (part near the rib (34c) on the side of the spacer portion (34a)).

Still further, the sealant (40) is interposed between the outer peripheral edge (35b) of the inner casing (35) and the tongue (34b) of the flange (34) at the position between the rib (34c) and the spacer portion (34a). This can allow the foaming pressure to work on the sealant (40) so that the sealant (40) can seal the gap between the inner casing (35) and the outer casing (30) in foaming. Therefore, even when the sealant (40) is not completely cured, sufficient sealability can be ensured. This can reduce time required for curing the sealant (40), thereby reducing time for the foaming process as a whole.

In addition, the sealant (40) is located on the casing inner side of the rib (34c). Accordingly, the rib (34c) can prevent the sealant (40) from flowing out, thereby improving the sealability of the sealant (40).

### <Other Example Embodiments>

The above example embodiment can have any of the following configurations.

The above example embodiment provides the rib (34c) on the flange (34) welded and fixed to the outer casing (30) so as to be formed around the entire outer peripheral edge (35b) of the inner casing (35), but is not limited in this respect. The rib (34c) may be formed at only part where the inner casing (35) tends to be deformed in foaming.

In addition, the above example provides the rib (34c) on the flange (34), but is not limited in this respect. As shown in FIG. 10, a groove (44c) capable of receiving the outer peripheral edge (35b) of the inner casing (35) may be formed in a tongue (44b) of a flange (44) for preventing deformation of the outer peripheral edge portion (35a) of the inner casing (35) caused by the foaming pressure. In FIG. 10, reference numeral 44a denotes a spacer portion.

### INDUSTRIAL APPLICABILITY

As described above, the present invention is useful for a case for a container refrigerator cooling the inside of a container which is mounted so as to cover one end surface of a container box.

## Claims

1. A casing structure for a container refrigerator which includes an outer casing (30) having a peripheral part fixed to a container box (2) so as to cover one end surface of the container box (2), and an inner casing (35) covering a casing inner side of the outer casing (30) so as to form a foaming space (V) for foaming a foaming agent (38) between the inner casing (35) and the outer casing (30), wherein
when the inner casing (35) is joined to the outer casing (30), an outer peripheral edge (35b) of the inner casing (35) is positioned on an inner side surface (30a) of the outer casing (30), and
the outer casing (30) includes on the inner side surface (30a) a stopper (34c, 44c) engaged with the outer peripheral edge (35b) so as to restrict deformation of the outer peripheral edge (35b) of the inner casing (35) in foaming the foaming agent (38) in the foaming space (V).

2. The casing structure of claim 1, wherein
the stopper is a protrusion (34c) formed on the inner side surface (30a) of the outer casing (30) so as to be located on a casing outer side of the outer peripheral edge (35b) of the inner casing (35) when the inner casing (35) is joined.

3. The casing structure of claim 2, wherein
the protrusion (34c) has a protruding ridge shape surrounding the outer peripheral edge (35b) of the inner casing (35) when the inner casing (35) is joined.

4. The casing structure of claim 2, wherein
the protrusion (34c) has a side surface (34d) on a side of the inner casing (35) when the inner casing (35) is joined, the side surface (34d) being inclined so as to be located on a casing outer peripheral side of the outer casing (30) as it goes to a protruding end.

5. The casing structure of claim 1, wherein
the stopper is a groove (44c) formed in the inner side surface (30a) of the outer casing (30) correspondingly to the outer peripheral edge (35b) of the inner casing (35) so as to be engaged with the outer peripheral edge (35b).

6. The casing structure of claim 1, wherein
a sealant (40) is provided in a gap between the outer peripheral edge (35b) of the inner casing (35) and the inner side surface (30a) of the outer casing (30) and/or in part of the gap located on a side of the foaming space (V).

7. A casing structure for a container refrigerator which includes an outer casing (30) having a peripheral part fixed to a container box (2) so as to cover one end surface of the container box (2), and an inner casing (35) covering a casing inner side of the outer casing (30) so as to form a foaming space (V) for foaming a foaming agent (38) between the inner casing (35) and the outer casing (30), wherein
when the inner casing (35) is joined to the outer casing (30), an outer peripheral edge (35b) of the inner casing (35) is positioned on an inner side surface (30a) of the outer casing (30), and
a sealant (40) is provided in a gap between the outer peripheral edge (35b) of the inner casing (35) and the inner side surface (30a) of the outer casing (30) and/or in part of the gap located on a side of the foaming space (V).

8. The casing structure of claim 1, wherein
the outer casing (30) is made of an aluminum alloy, and
the inner casing (35) is made of fiber reinforced plastic.

9. A method for manufacturing a casing for a container refrigerator which includes an outer casing (30) having a peripheral part fixed to a container box (2) so as to cover one end surface of the container box (2), and an inner casing (35) covering a casing inner side of the outer casing (30) so as to form a foaming space (V) for foaming a foaming agent (38) between the inner casing (35) and the outer casing (30), the method comprising:
an inner casing forming step (SA1) of forming the inner casing (35) so that, when the inner casing (35) is joined to the outer casing (30), the outer peripheral edge (35b) of the inner casing (35) is positioned on the inner side surface (30a) of the outer casing (30);
an outer casing forming step (SB1) of forming the outer casing (30) so that a stopper (34c) engaged with the outer peripheral edge (35b) of the inner casing (35) when the foaming agent (38) is foamed in the foaming space (V) is formed on the inner side surface (30a);
a sealant applying step (SB6) of applying a sealant (40) to predetermined part on a casing inner side of the stopper (34c) on the inner side surface (30a) of the outer casing (30);
a casing assembling step (SB7) of joining and fixing the casings (30, 35) to each other while positioning the outer peripheral edge (35b) of the inner casing (35) relative to the stopper (34c) so that the applied sealant (40) is located in a gap between the inner side surface (30a) of the outer casing (30) and the outer peripheral edge (35b) of the inner casing (35) and/or in part on a casing inner side of the outer peripheral edge (35b) of the inner casing (35); and
a thermal barrier forming step (SB 11) of forming a thermal barrier (15) by foaming the foaming agent (38) after filling it in the foaming space (V) formed between the outer casing (30) and the inner casing (35) joined to each other.
